# EUROPEAN PATENT APPLICATION

(11) **EP 1 501 282 A2**
(43) Date of publication of application: **26.01.2005**
(21) Application number: 04016763.7
(22) Date of filing: 15.07.2004
(51) Int. Cl.: H04N 1/60

(54) **Image recording apparatus**

(30) Priority: 22.07.2003 JP 2003199721
(71) Applicant: Konica Minolta Medical & Graphic Inc., Tokyo 163-0512 (JP)
(72) Inventor: Doi, Masato Konica Minolta Medical & Graphic, Inc., Sayama-shi Saitama-ken, 350-1321 (JP)
(74) Representative: Henkel, Feiler & Hänzel

(57) **Abstract**

A data conversion device comprising a color correction table to express image data as the color density, a color density - light source driving data conversion table and a light source driving table to switch the light source drivers pixel by pixel based on the combination of the colors of the light source driving data, wherein the light source driving table comprising a continuous image pixel color density - light source driving data conversion table to convert the reproduced color density of continuous pixel color density to the light source driving data, and a discontinuous image pixel color density - light source driving data conversion table to convert the reproduced color density of discontinuous image pixel color density to the light source driving data, the discontinuous image pixel color density - light source driving data conversion table is arranged so that color density drops associated with discontinuous image pixel is compensated.

## Description

### BACKGROUND OF THE INVENTION

The present invention relates to image recording, an apparatus which specifically produces color proofs to confirm finishing of printed matter in advance by exposing color photographic material having plural color layers to light beams from plural light sources having different wavelength, based on mesh-point type image data (mesh point image data) by a host apparatus such as an RIP (raster image processor) or a mesh point conversion processing apparatus.

### DESCRIPTION OF RELATED ART

In general, when producing color printed matter, sometimes color proofs are required during the drafting step of a film. In such a case, the final finishing quality of the printed matter, including the inspections of the layout, the color of the draft of the film and the existence of text errors, etc., are checked before manufacturing of the final printed version by producing rough draft prints (color proof) by using spectral color manuscript films, which are separated into a C (cyan) plate, a M (magenta) plate, a Y (yellow) plate and a K (black) plate.

In recent years, it is not rare that full-digital editing such as computer software manipulated images, which are input from a scanner for editing and paginated, as DTP (desk top publishing), etc. have come into wide use.

In the process stated above, image data setting output to directly output the image data whose page editing has been finished onto a film, CTP (Computer To Plate) to directly output the image data onto a printing plate and further CTC (Computer To Cylinder) to output the image data onto the plate, wound around the cylinder of a printing machine are commonly used with the aim of further higher efficiency.

In such case, it is necessary to achieve film output and printing plate output only for the color proofs. It is useless to make these outputs since it takes the same time and effort as to achieve the final prints, further the film and the printing plate serve no other purpose. These are common problems with this process.

Consequently, especially in the step to make and edit full digital images via computer, the system to obtain color images by directly outputting digital image data, which is also known as DDCP (Direct Digital Color Proof) or DCP (Digital Color Proof), is required.

DDCP makes it possible to practice confirmation of patterns, a color tone, phrases and characters in the color proofs to reproduce the finishing of printed matter through the direct output of digital images processed in a computer before processing computer of the recorded digital images to an image setter, simulating final printing by directly making printing plates via CTP or directly recording images onto a printing plate mounted on the cylinder of a printing press via CTC.

Additionally, color proofs in these plate making and printing processes are provided and used mainly for the following three situations.
(1) In-house proofs to check problems at production line;
(2) Customer proofs submitted to clients and designers for final confirmation; and
(3) Final printing samples submitted to the supervisor of the printing press.

In a proof process, in regard to in-house proofs and some customer proofs, from the view point of shortening delivery time and reducing cost, there are cases that DDCP, which uses proof material incapable of reproducing mesh-point images, namely such output via the sublimation transfer method, ink-jet and electronic photographing, etc. are mainly used for a visual check. However a proof output which requires faithfully reproduced printing mesh points is required for checking reproducibility of highlighted portions and minutes details, further as a quality check of the existence of inappropriate interference patterns, which are called moiré when occurring during printing, and the proofs used for printing samples.

DDCP, which satisfies these needs, is an apparatus which prints output onto actual printing paper sheets after exposing the photographic material using a high power heat mode laser. However, these exists a drawback of the system, which can reproduce high quality mesh point images. The drawback being the cost of the apparatus and the photographic material is relatively high.

On the other hand, in recent years, DDCP, which utilizes a silver halide based color photographic material, which enables checking mesh point images at low cost, has come into wide use. The method, which utilizes a silver halide based color photographic material, employs a light spot, which is comprised of plural light beams of R, G and B, whose wavelengths differ from each other, exposes the photographic material, which is comprised of C, M and Y color forming layers, and develops individual color dots of C, M and Y to form mesh point color images. This type of image recording apparatus is disclosed for example in patent reference No. 1 below.

### (Patent Reference 1)

Japanese Patent Application Opened to Public Inspection 2002-247515, Fig. 1, page 1.

In this apparatus, in order to develop the color C, M or Y on the photographic material, the photographic material is exposed to one of the light beam from the light source of C, M or Y.

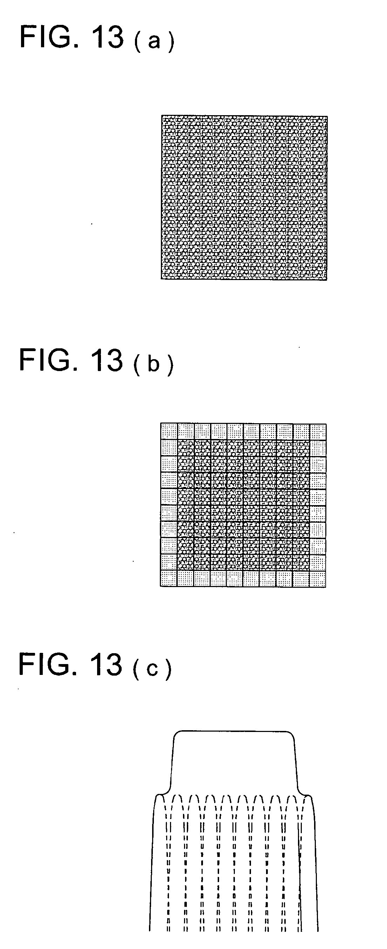

Fig. 13 explains aspects of a mesh-point when forming a mesh point color image. Fig. 13(a) shows an example of one point of the mesh when recording a mesh point image onto photographic material. Fig. 13(b) shows the aspect of pixels when the mesh is exposed, where a mesh point is composed of 10 X 10 pixels.

It has newly become clear that when forming a mesh shown in Fig. 13(a), the color density shown in Fig. 13(b) is formed on a photographic material even though 10 X 10 pixels were uniformly exposed.

When exposing photographic material via light beams of a Gaussian distribution, shown by dashed lines as shown in Fig. 13(c), the color density is strengthened by the fact that the extent of the slopes of adjacent pixels overlaps each other in the case of continuous-pixels, which is when adjacent pixels are continuously exposed. Namely, the color density shown in a solid line will be obtained even though the light beams shown in dashed lines expose the photographic material.

As explained above, the facts that color density drops at the edge or at discontinuous portions of a mesh point image has been newly discovered which will be called edge effect or discontinuous pixel effect in this specifications.

Additionally, also newly discovered was a new phenomenon being that a mesh is seen smaller than the expected size due to the discontinuous effect. Also discovered was that this phenomenon occurs not only in mesh point images but also is continuous pixel/discontinuous pixel images.

Further, the phenomenon that the mesh size decreases due to the discontinuous pixel effect also occurs due to characteristics of photographic material and light beams used for the exposure. Based on this discovery, as the size of a mesh differs slightly when the mesh is seen through different colors such as Y, M or C, a phenomenon of color gaps occurs around the circumference of the mesh when combining of two or more of the Y, M and C colors.

### SUMMARY OF THE INVENTION

The objective of the present invention is to provide an image recording apparatus which eliminates above problems. A more specific objective of the present invention is to provide an image recording apparatus capable of eliminating the phenomenon that when forming a mesh point image on photographic material, a color density drops at the edge, or at the discontinuous portion of the mesh.

Following paragraphs overcome the above problems.
(1) According to the present invention, there is provided an image recording apparatus to record color images onto a photographic material having plural color layers exposed to light beams from plural light sources having different wavelength each other, wherein the plural light sources are driven by light source driving data generated from image data being input to the image recording apparatus and separated into each color plate of yellow (Y), magenta (M), cyan (C) and black (K), the image recording apparatus comprising:
   an exposing section having plural light sources to expose the photographic material;
   a control device to cause the light source driving data based on the image data to drive the light source to expose the photographic material;
   a data conversion device to convert image data to light source driving data via reproduced color density data expressing the image data as a color density; the data conversion device comprising:
      a color correction table to convert the image data to reproduced color density data expressing the image data as color densities;
      an color density - light source driving data conversion table to convert the reproduced color density data to light source driving data;
      a light source driving data table to control switching of light sources pixel by pixel based on a color combination of the light source driving data;
   the color density - light source driving data conversion table comprising:
      a continuous image pixel color density - light source driving data conversion table to convert the reproduced color density of continuous pixel color density to the light source driving data; and
      a discontinuous image pixel color density - light source driving data conversion table to convert the reproduced color density of discontinuous image pixel color density to the light source driving data, wherein
      the discontinuous image pixel color density - light source driving data conversion table is arranged so that color density drops associated with discontinuous image pixel is compensated in the discontinuous pixel color density - light source driving data conversion table.

   In this invention, the image recording apparatus receives image data being separated into each color plate of yellow (Y), magenta (M), cyan (C) and black (K), generates light source driving data from the image data to drive each light source and expose a photographic material having plural color layers to light beams from the light sources having different wavelength each other, wherein the image recording apparatus has a continuous image pixel color density - light source driving data conversion table to convert the reproduced color density of continuous pixel color density to the light source driving data and a discontinuous image pixel color density - light source driving data conversion table to convert the reproduced color density of discontinuous image pixel color density to the light source driving data in order to convert reproduced color density to the light source driving data after converting the image data to reproduced color density data which expresses the image data as the color density of a reproduced color so that the color density drop at discontinuous image pixels is compensated in the discontinuous image pixel color density - light source driving data conversion table.
   Namely, when generating light source driving data from image data, the discontinuous image pixel color density - light source driving data conversion table is arranged so that the color drops at discontinuous image pixels is compensated, which is different from the continuous image pixel color density - light source driving data conversion table.
   Thereby, it comes to be possible to avoid the phenomenon of color density drops occurred at the edges of mesh point images formed on the photographic material or the portion of discontinuous image pixels. Also, it comes to be possible to avoid phenomenon occurred based on other than mesh point images as well.
(2) According to the present invention, there is also provided the image recording apparatus as stated in item (1), wherein the color density of discontinuous image pixel is arranged so that the color density of discontinuous image is equal to the color density of continuous image pixel.

It comes to be possible to faithfully reproduce colors and further to prevent dotted color shifts thereby.

According to the present invention, there is further provided the image recording apparatus as stated item (1) or item (2), wherein the image recording apparatus having a detecting device to detect whether the image data is continuous image pixel or discontinuous image pixel selectively uses the continuous pixel color density - light source driving data conversion table or the discontinuous pixel color density - light source driving data conversion table in the color density - light source driving data conversion table based on the result of the detecting device. Thereby it comes to possible to realize steady operation.

### BRIEF DESCRIPTION OF THE DRAWING

Fig. 1 is a block diagram showing the configurations of the main section in the embodiment of the present invention.
Fig. 2 is a flowchart showing the operations of control section of the present invention.
Fig. 3 is a flowchart showing the operations of paper sheet processing in the control section.
Fig. 4 is a flowchart showing the operations of the printing process in the control section.
Fig. 5 is a flowchart showing the paper sheet delivery process in the control section.
Fig. 6 is a flowchart showing the ejecting process of the control section in the present invention.
Figs. 7(a) and 7(b) are block diagrams showing the configurations of LUT (Look Up Table) in the embodiment of the present invention.
Fig. 8 is an overall perspective view of the color proof apparatus of the present invention.
Fig. 9 is a schematic diagram showing the internal configuration of the color proof apparatus of the present invention.
Fig. 10 is a side view of paper sheet loading section, paper sheet supplying section and paper sheet delivery section.
Fig. 11 is a plan view of the main scanning section and sub-scanning section of the embodiment of the present invention.
Fig. 12 is a block diagram showing the electric configuration of the image recording apparatus of the present invention.
Figs. 13(a) - 13(c) explain a phenomenon that the mesh of a mesh point image looks smaller due to a discontinuous image pixels effect.

### DETAILED DESCRIPTION OF THE INVENTION

The preferred embodiment of the image recording apparatus of the present invention will be explained by referring to the attached drawings. The present invention is not to be construed to be limited to the embodiments below.

The major configurations of the image recording apparatus of the present invention will now be explained.

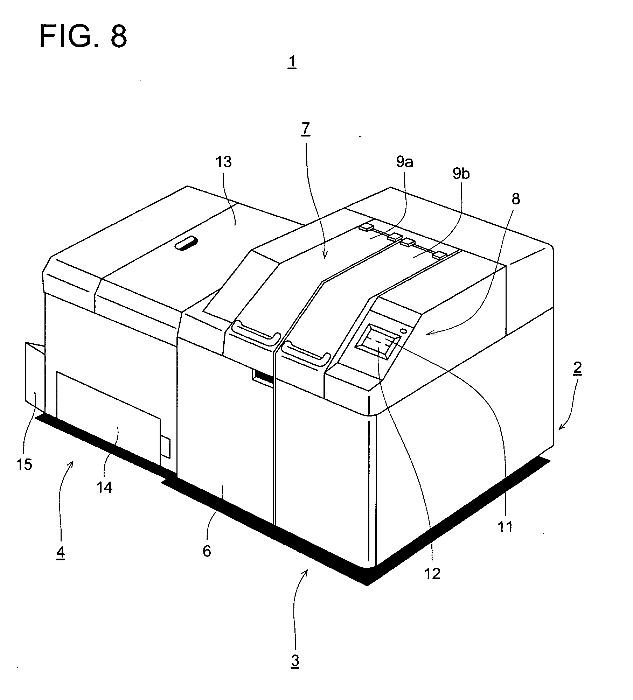

A color proof producing apparatus to which the embodiment of the present invention applies is shown from Fig. 8 onward. The present invention is not limited to a color proof producing apparatus but can also be a monochrome proof producing apparatus. A color proof-producing device as a color image recording apparatus will be explained as an example.

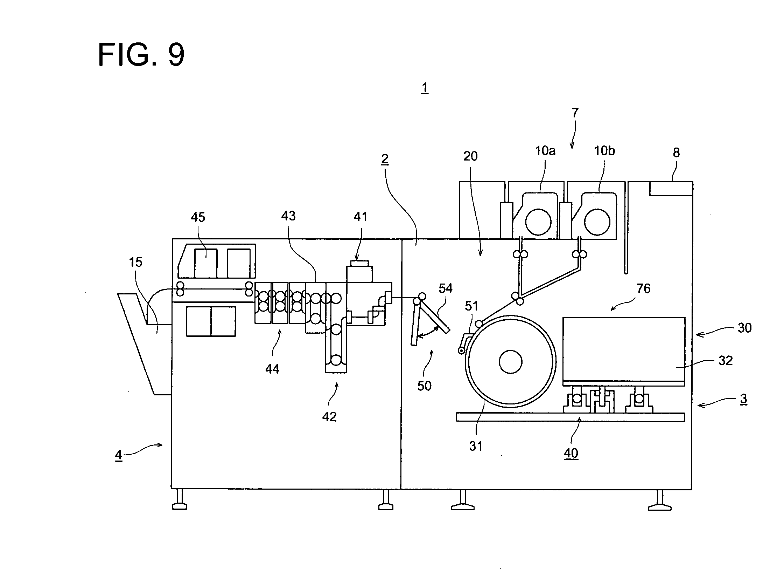

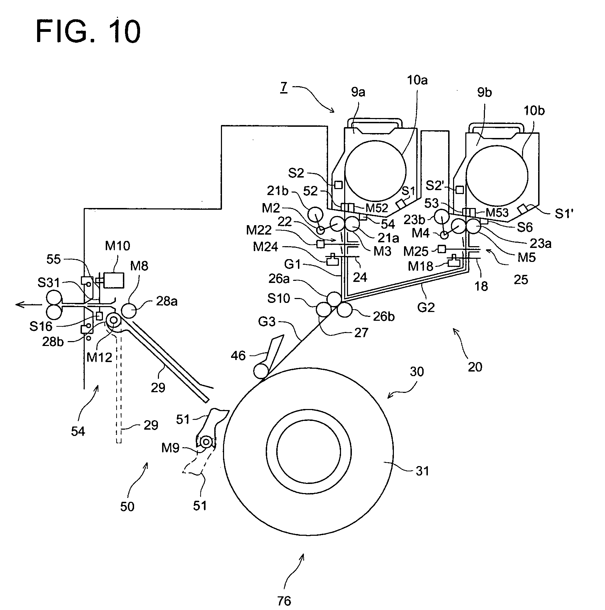

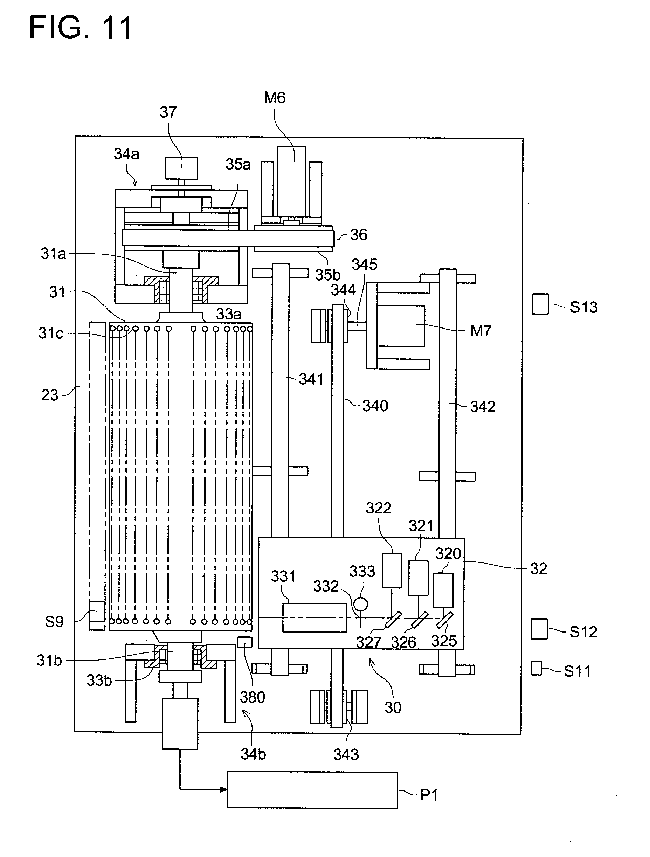

Fig. 8 is an overall perspective view of the color proof apparatus, and Fig. 9 is a schematic diagram showing the internal configuration of the same. And Fig. 10 and Fig 11 show the internal main portions of the color proof apparatus.

Exposing unit 3 and developing process unit 4 are provided in main body 2 of color proof apparatus 1. Upper panel 13 and front panel 6 are hinged to exposing unit 3 so as to freely open and close so that maintenance can be performed from the top or the front.

Paper sheet loading section 7, which is for the loading of photographic material, is provided in an upper portion of exposing unit 3 and operation section 8 is provided at the front side of main body 2, which is located at the side of paper sheet loading section 7. In which paper sheet supply covers 9a and 9b are provided and which open and close freely. Further liquid crystal display panel 11 and touch panel 12 are integrated to operation section 8.

Upper panel 13 and supplying panel 14 open and close easily in developing process unit 4 so that maintenance can be performed from the top and re-supply of processing liquid is performed from the front. Printed sheet delivery section 15 is provided in a side section of developing unit 4 where the processed photographic material is delivered.

Fig. 9 is a schematic showing the major internal configuration of this color proof producing apparatus. Exposing unit 3 and developing process unit 4 are provided in main body 2 of color proof producing apparatus 1. Unit 3 exposes photographic material and records image information, and developing unit 4 develops the exposed photographic paper sheets.

Exposing unit 3 includes paper sheet loading section 7, paper sheet feeding section 20, exposing chamber 76, paper sheet delivery section 50 and operation section 8. Cartridges 10a and 10b, in which photographic material (being paper sheets or photographic paper sheets) as a recording medium is stored, are housed inside of paper sheet supplying covers 9a and 9b, as shown in Fig. 8. In operation section 8, various parameters such as setting time, etc. and the display of the need for the exchange of cartridges are performed.

Paired paper sheet supplying rollers are provided in paper sheet supplying section 20, which draw photographic paper sheets from cartridge 10a or 10b and transit them to exposing chamber 76 after the photographic paper sheets are cut to a predetermined length by an integrated cutter mechanism.

Exposing chamber 76 includes main scanning section 30, drum 31 and sub-scanning section 40. Drum 31 is rotatably provided in main scanning section 30 and photographic material rotates with drum 31 onto which external surface the photographic material is sucked. Optical unit 32 is provided opposite of drum 31 in main scanning unit 30, so that it can move parallel to the drum axis. Optical unit 32 receives digital image signals and forms images onto the photographic paper sheet sucked on drum 31 by exposing the photographic paper sheet using light beams.

Paper sheet delivery section 50 incorporates separation claw 51, accumulator section 54, a part of which includes accumulator guide 29 and conveyance roller 28, etc., separates exposed photographic paper sheet from drum 31 by using separation claw 51, and delivers the exposed photographic paper sheet to developing process unit 4, at the rate of developing of the photographic paper sheet while stacking the exposed photographic paper sheet in accumulator section 54.

Second exposing section 41, developing section 42, fixing section 43, stabilizing section 44 and drying section 45 are housed in developing process unit 4. Second exposing section 41 exposes the portion of photographic material which has not been exposed by exposing unit 3, and forms a pseudo-image. Developing processing is applied to the photographic material exposed in the second exposing unit while the photographic material is conveyed through developing section 42, fixing section 43 and stabilizing section 44. The processed photographic material is dried in drying section 45 and transported to paper sheet delivery section 15.

Next, exposing unit 3 in color proof producing apparatus 1 will be detailed by using Figs. 10 and 11. Fig. 10 is a side view of paper sheet loading section 7, paper sheet supplying section 20 and paper sheet delivery section 50. Cartridges 10a and 10b, which can be easily loaded or removed, are loaded to paper sheet loading section 7. Cartridges 10a and 10b are set at a position where supplying rollers 21a and 21b or 23a and 23b are located in paper sheet supplying section 20 on the condition that predetermined length of photographic paper sheet is being drawn from cartridge shutters 52 or 53. Different sizes of paper sheets are installed in cartridges 10a and 10b. After one of the cartridges is selected via touch panel 12, the paper sheet is fed from the cartridge.

Provided in paper sheet loading section 7, are cartridge sensors S1 and S1' which detect the loading/unloading of a cartridge, which cover sensors S2 and S2' detect the open/closed status of paper sheet feeder covers 9a and 9b. Cartridge shutters 52 and 53 are open/closed by shutter motors M52 and M53.

In paper sheet feeding section 20, the following devices are mounted. These devices are paper end sensors S4 and S6, paired paper sheet feeding rollers 21a and 21b, paper sheet feeding roller nipping releasing motors M2 and M4, paper sheet feed detecting sensors S21 and S23, which are attached to paper sheet feeding rollers 21a and 23a, cutters 22 and 25, cutter motors M22 and M25, paper sheet shutters 24 and 18, conveyance guides G1 and G2, middle rollers 26a and 26b, encoder 27, conveyance guide G3 and squeeze rollers 46.

Paper end sensors S4 and S6, in paper sheet feeding section 20, are provided at the position surrounded by paired paper sheet feeding rollers 21a and 21b and cartridge 10a, paper sheet feeding rollers 23a and 23b and cartridge 10b respectively. These paper sheet end sensor S4 and S6 detect the end of a photographic paper sheet drawn from cartridge 10a or 10b.

One of paired rollers 21a and 23a of paper sheet feeding rollers 21a and 21b, and 23a and 23b, are fixed and other paper sheet feeding rollers 21b and 23b are movably provided, which can be moved by paper sheet roller nipping releasing motors M2 and M4. In order to prevent paper sheets from being creased during the nipping of the rollers, paper sheet feeding rollers 21b and 23b are moved to standby positions during other than conveyance of paper sheets.

Paper sheet feeding roller 21b or 23b moves to the conveyance position to nip photographic material in conjunction with paper sheet feeding rollers 21a, or 23a, while conveying photographic material. Paper feeding motors M3 or M5 drive paper sheet feeding rollers 21a or 23a respectively to convey the photographic material. At such time, paper sheet feed detecting sensors S21 or S23 measure the length of the fed paper sheet, which is drawn from the paper sheet cartridge.

Cutter motors M22 and M25 operate cutters 22 and 25, which cut photographic material fed by paired paper sheet feeding rollers 21a and 21b or 23a and 23b. Cut photographic material is conveyed to paired middle rollers 26a and 26b via conveyance guide G1 or G2. When conveyed through conveyance guide G1 or G2, paper sheet shutter 24 or 18 is open or closed depending on the conveyance situation.

Paired middle rollers 26a and 26b, encoder roller 27 and squeeze roller 46 are deployed linearly and conveyance guide G3 is provided between encoder roller 27 and squeeze roller 46. Encoder roller 27 conveys photographic paper sheets during rotation and includes paper sheet feed detecting sensor S10 to measure the length of fed paper sheets. Squeeze roller 46 causes photographic paper sheet to be pressed on to drum 31.

Fig. 11 is a plan view of optical unit 3, which includes drum 31, main scanning section 30 and sub-scanning section 40. Shaft sections 31a and 31b at both ends of drum 31 in main scanning section are rotatably supported by supporting platforms 34a and 34b via bearings 33a and 33b. Driving pulley 35a is provided on shaft section 31a of one end of drum 31. Said driving pulley 35a is connected to output pulley 35b of drum driving motor M6 via belt 36 whereby drum rotating motor M6 drives and rotates drum 31. Rotary encoder 37 is provided on shaft section 31a and outputs rotating pulses, which are used to control the pixel clock in synchronization with drum rotation.

Shaft section 31b at the other end of drum 31 is connected to suction blower P1. Drum 31 is hollow on which surface suction holes 31c are formed. Suction blower P1 causes the photographic paper sheet to be sucked onto the surface of drum 31 by reducing internal pressure of drum 31.

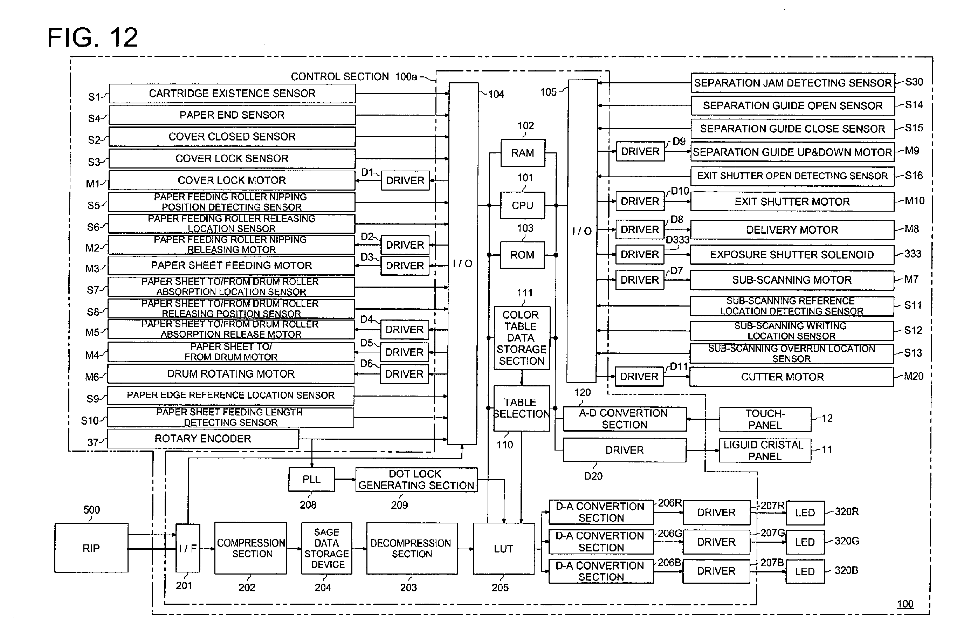

Red LED unit 320R, green LED unit 320G and blue LED unit 320B (see also Fig. 12) are provided in optical unit 32. Laser beams from red LED unit 320R, green LED unit 320B and blue LED unit 320B expose photographic paper sheets on drum 31 via mirrors 325, 326 and 327 and focusing lens 331. Solenoid 333 opens/closes exposing shutter 332 for an optical path when starting/finishing an exposure.

Optical unit 32 attached to moving belt 340, is provided so it can move parallel to the drum axis under the guidance of paired guide rails 341 and 342. Moving belt 340 is mounted around pulleys 343 and 344, and pulley 344 is connected to output shaft 345 of sub-scanning motor M7 so that optical unit 32 is drawn parallel to the drum axis.

Still referring to Fig. 11, sub-scanning reference position detecting sensor S11, sub-scanning writing position detecting sensor S12 and sub-scanning overran position detecting sensor S13 are provided parallel to the drum axis of optical unit 32. Optical unit 32 remains in position where sub-scanning reference position detecting sensor is located. Sub-scanning starts from the sub-scanning reference position and stops with movement corresponding to the size of the image, after which optical unit 32 returns to the sub-scanning reference position.

Referring again to Fig. 10, paper sheet delivery section 50 includes separation claw raising/lowering motor M9, accumulator guide 29, accumulator raising/lowering motor M12, conveyance rollers 28a, 28b, delivery drive motor M8, exit shutter 55, and exit shutter detecting sensor S16, exit sensor S31 and exit shutter drive motor M10, etc. Separation claw raising/lowering motor M9 moves separation claw 51 to the upper or lower position. Separation claw 51 is so arranged that at the upper position, the claw section of separation claw 51 removes photographic paper sheet on drum 31 and at the lower position, the separation claw section does not have control photographic paper sheet on drum 31.

Accumulator raising/lowering motor M12 moves accumulator guide 29 into the required position. In the upper position, accumulator guide 29 collects ejected photographic paper sheets and causes the paper sheets to be stacked in temporary storage. Movement of accumulator guide 29 and separation claw 51 to the lower position causes the photographic paper sheets to be hung down from accumulator guide 29.

Photographic paper sheets passing through accumulator guide 29 are delivered to developing process unit 4, at the developing rate of developing process unit 4 by paired conveyance rollers 28a and 28b driven by delivery drive motor M8. Opening/closing control of exit shutter 55 is driven by exit shutter drive motor M10. Exit shutter opening/closing control detecting sensor S16 detects the open or closed condition of exit shutter 55. Exit shutter 55 regulates the delivery timing of photographic paper sheets and delivers the photographic paper sheets to developing process unit 4 by opening exit shutter 55 at a prescribed timing. Exit sensor S31 which detects that photographic paper sheet have passed through developing process unit 4, is provided downstream of exit shutter 55.

Fig. 12 is a block diagram showing the electric configuration of the image recording apparatus of the present invention. Control section 100a includes CPU 101, RAM 102 and ROM 103 and is connected to sensors and actuator blocks through I/O ports 104 and 105. Further, control section 100a controls the actuator blocks based on input from the sensors above.

The following sensors are connected to control section 100a; cartridge existence sensor S1, closed cover detecting sensor S2, locked cover detecting sensor S3, paper end sensor S4, paper sheet feeder position detecting sensor S5, paper sheet feeding roller release position detecting sensor S6, paper sheet attachment position detecting sensor S7, paper sheet detachment position detecting sensor S8, paper edge reference position sensor S9, paper sheet feeding length detecting sensor S10, rotary encoder 37, sub-scanning reference position detecting sensor S11, sub-scanning writing position detecting sensor S12, sub-scanning overrun position detecting sensor S13, open separation claw detecting sensor S14, closed separation claw sensor S15, exit shutter detecting sensor S16 and separation jam detecting sensor S30. Also, exit sensor S31 is included but not shown.

The following parts are integrated actuator group; cover lock motor M1, paper sheet feeding roller release motor M2, sheet feeding motor M3, cutter motor M20, paper sheet attachment driving motor M4, paper sheet detachment motor M5, drum rotating motor M6, sub-scanning motor M7, exposure shutter solenoid 333, delivery drive motor M8, separation claw raising/lowering motor M9, exit shutter drive motor M10 are connected to drivers D1, D2, D3, D11, D5, D4, D6, D7, D333, D8, D9 and D10 respectively and engaged as required.

Liquid crystal panel 11, which displays the operating status of the color proof apparatus in operation section 8 is controlled by driver D20. Digital signals from touch panel 12 are input to A/D converter 120 and sent to CPU 101.

Digital image information is sent to data buffer 204 from RIP (Raster Image Processor) 500 connected to image recording apparatus 100 from the exterior of the apparatus through image data I/F section 201.

Digital image information from data buffer 204 is sent to driver 207R, 207G and 207B through LUT (image memory in which a Look Up Table is stored) 205 and D-A converters 206R, 206G and 206B are synchronized by the pixel clocks, which is generated by pixel clock generator section 209, which is synchronized with the output signals of PLL 208, which is based on photographic paper sheet feeding information from the output signals of rotary encoder 37. Drivers 207R, 207G and 207B drive red LED unit 320R, green LED unit 320G and blue LED unit 320B respectively.

The mesh point image data of each color (C, M, Y and K) is arranged and sent to image data I/F section 201 in which the RIT format is converted into exposure format, to be stored in data buffer 204. All color is exposed at the same time after one raster of image data has been stored in data buffer 204.

Conversion to R, G, and B by LUT 205 and the required exposure is performed repeatedly color by color; the number of colors (Y, M, C and K) for spectral color data or wavelength-by-wavelength of each light source (R, G and B).

In this embodiment of the present invention, in order to convert reproduced color density data to light source driving data after the reproduced color density data, which express image data by the color density of reproduced color, provided are a continuous pixel color density - light source driving data conversion table which converts reproduced color density data of continuous pixel to light source driving data, and a discontinuous pixel color density - light source driving data conversion table to convert the reproduced color density data of discontinuous pixel data to light source driving data. In the discontinuous pixel color density - light source driving data conversion table, an edge effect compensation process is executed so that drops of color density of discontinuous pixel is compensated. This edge effect compensation process will be described blow.

### DETAILED DESCRIPTION OF THE INVENTION

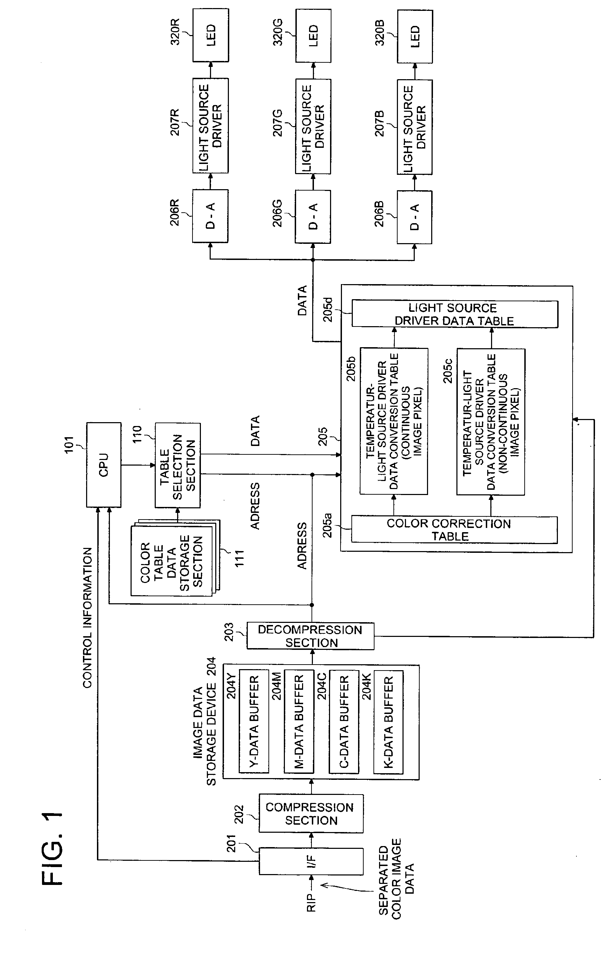

The configuration of an apparatus having an edge effect compensation process, which is the feature of the embodiment of the present invention, will be explained by referring to Fig. 1.

Fig. 1 is a block diagram of functions conducted by CPU 101, which plays a main role in carrying out the edge effect compensation process of this embodiment. Fig. 1 is also a block diagram showing the main configurations in detail. The same symbols described earlier in Fig. 12 will be used for the same components in Fig. 1.

In Fig. 1, numeral 101 is a CPU to control all the operations of an image recording apparatus. CPU 101 represents a control device for forming color images by repeated exposures based on the number of spectral colors or of wavelengths of light sources and performs multiple recordings onto the recoding medium.

CPU 101 incorporates a control device in conjunction with LUT 205 to control a device executing of edge effect compensation process.

Numeral 110 is a table to selectively use table data from a data storage section being configured by a ROM stored plural table-data and non-volatile memory, etc.

Numeral 201 is an interface which receives data (control data and image data) from the RIP of a mesh point processing apparatus.

Numeral 202 is a data compression section, which detects whether image data is continuous or discontinuous. Data compression 202 generates compression image data by continuous compressing by detected output and image data, while checking whether the image data is continuous pixel or discontinuous pixel.

Numeral 204 is a data buffer to store compressed image data from the mesh points of Y, M, C and K of each image plane from the mesh point processing apparatus.

Numeral 203 is a decompression section to expand the compressed data in the data buffer 204.

Image data of Y, M, C, K from a mesh point conversion processing apparatus such as RIP 500, are placed in data buffers 204Y, 204M, 204C and 204K of each image plane. Then, stored data of Y, M, C and K, which are stored for each image plane, are read in a parallel mode in synchronization with pixel clocks and used as an address data to LUT 205 when LUT conversion is executed.

Numeral 205 is a LUT (Look Up Table) as a data conversion device to output R, G and B data used for performing multiple exposure of color photographic material by receiving output signals from data buffers 204Y, 204M, 204C and 204K as an address data.

When exposing the recording medium, in the embodiment of the present invention, color images are formed by repeatedly exposing R, G and B separately by using each wavelength of the color and separately recorded onto the recording medium, not all at once for the group exposure of R, G and B.

The LUT 205 is arranged so that the data to denote the light intensity of R, G and B from color table data section 111 based on the instructions of table selection section 110, is given in advance and written in an address for which the address specified. Namely, the predetermined value of R, G and B are written in the address specified by the address data in an address bus.

The contents of tables, which are written into LUT 205 and read from color table storage section 111 include color correction table 205a, continuous pixel color density - light source driving data conversion table 205b which convert reproduced color density of continuous pixel to light source driving data, discontinuous pixel color density - light source driving data conversion table 205c which convert reproduced color density of discontinuous pixels to light source driving data, and light source driving data table 205d.

Namely, LUT 205, as a data conversion device, is composed of color correction table 205a which convert image data from a host apparatus to reproduced color density data, which expresses the color density of a reproduced color; color density - light source driving data conversion tables 205b and 205c which convert said reproduced color density data to light source driving data; and light source driving data table 205d to switch the driver of the light source pixel by pixel of the color combinations of said light source driving data.

Color density - light source driving data conversion table comprises continuous pixel color density - light source driving data conversion table 205b which converts reproduced color density of continuous pixel to light source driving data, and discontinuous pixel color density - light source driving data conversion table 205c which convert reproduced color density of discontinuous pixels data to light source driving data, and said discontinuous pixel color density - light source driving data conversion table 205c is a table to compensate for an color density drop.

In the case described above, it is preferable that continuous pixel color density - light source driving data conversion table 205b accurately reproduces each color density of Y, M and C in continuous pixels when reproducing one of pixel of Y, M or C, or accumulations of these pixels on photographic material.

Further in the case described above, it is preferable that discontinuous pixel color denstiy - light source driving data conversion table 205c is arranged to compensate for color density drops of Y, M and C at an edge portion or discontinuous pixels when reproducing pixel of Y, M or C, or accumulations of these pixels on photographic material.

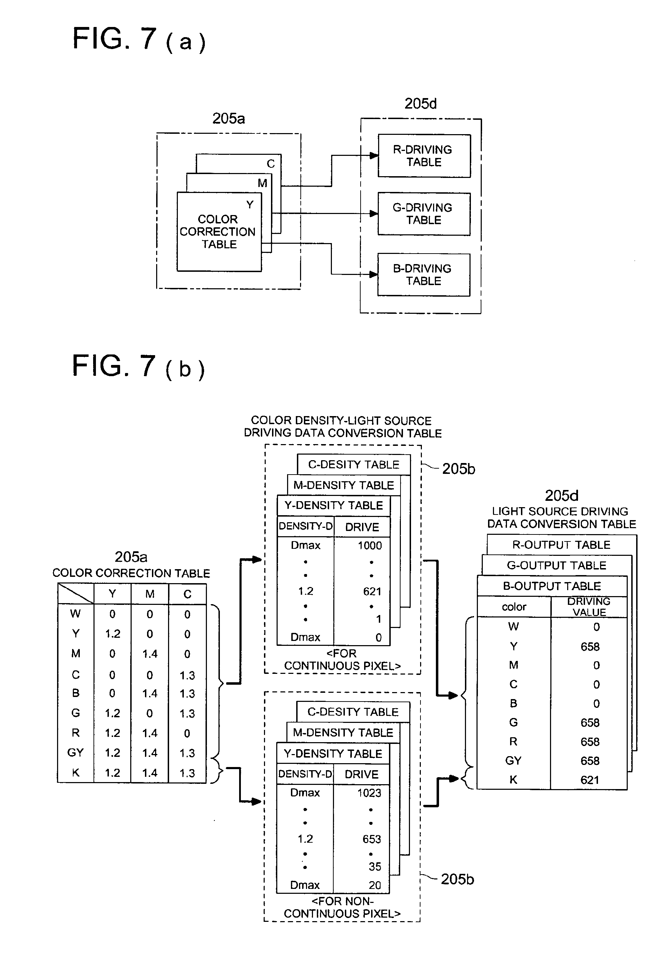

In a conventional image recording apparatus, LUT 205 is composed of color correction table 205a and light source driving data table 205d (R-, G- and B-driving tables) as shown in Fig. 7(a).

On the other hand, in the embodiment of the present invention as shown in Fig. 7(b) is comprised of color correction table 205a, light source data table 205d, and color density - light source driving data conversion tables 205b and 205c which convert reproduced color density data to light source driving data, and color density - light source driving data conversion tables 205b and 205c are located between color correction table 205a and light source driving data table 205d.

When generating pixels of Y, M, or C or accumulated pixels of Y, M and C, in regard to continuous pixel, continuous pixels color density - light source driving data conversion table 205b is used to reproduce individual color density of said Y, M and C.

On the contrary, when generating pixels of Y, M, or C or accumulated pixels of Y, M and C, in regard to discontinuous pixel, discontinuous pixels color density - light source driving data conversion table 205c is used to compensate for color density drops at said discontinuous pixel.

A continuous pixel is defined as one pixel being adjacent to four pixels and where no color density drop occurs. And discontinuous pixel is defined as any one of the four pixels, which are adjacent to one pixel, and when it is omitted, an color density drop occurs. (Please refer to Fig. 13)

Numeral 206 is a D/A converter to convert all output signals (light source driving data) from LUT 205. Numerals 207R, 207G and 207B are light source drivers, which receive the output from D/A converters 206R, 206G and 206B and drive LDEs 320R, 320G and 320B.

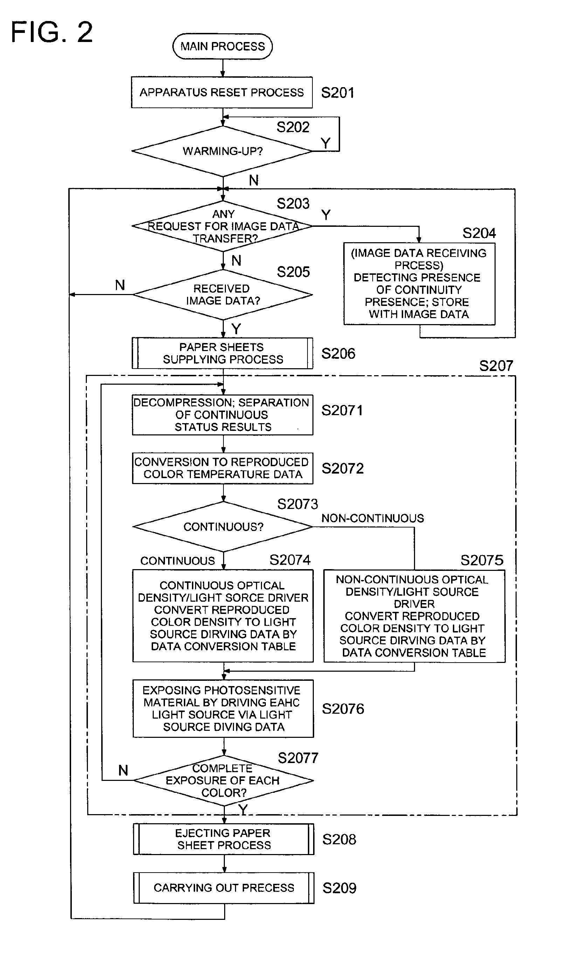

The operations of the main instructions of a computer program running under CPU 101 for exposing unit 3 will be explained by using the flow chart shown in Fig. 2.

CPU 101 initializes apparatuses such as exposing unit 3 and developing unit 4, etc. (Step S201) when the main processing begins. In addition to the initialization of apparatuses, initializing of each mechanical section is performed. After that CPU 101 directs color proof producing apparatus 1 to keep the warming-up operation of operational sections until total color proof producing apparatus 1 is stabilized. (Step S202)

After that the computer program mentioned above determines whether an image data transfer request from RIP 500 has been received (Step S203), and if so the transfer request is received (Step S203: YES) then performs image data receiving process (S204).

In the image data receiving process, the mesh point image data of each color (C, M, Y and K) generated in RIP 500 is transferred to image data input section 201, where RIP data format is converted to the data format for exposure and stored in data buffer 204.

At this point, continuous condition detected results, which indicates whether the image data is continuous or discontinuous in compression section 202, are generated in compression section 202 and stored in data buffer 204 together with the image data after it is compressed.

CPU 101 then checks whether data buffer 204 holds received image data (Step S205) when the image data transfer request has not been received. (Step S205: N).

When no image data has been received in data buffer 204 (Step 205: N), the processes of step 203 and step 205 are repeated until an image data transfer request is received and image data is stored in data buffer 204.

When received image data have been written in data buffer 204 (Step S205: Y), CPU 101 starts the paper sheet feeding and conveying process. (Step S206).

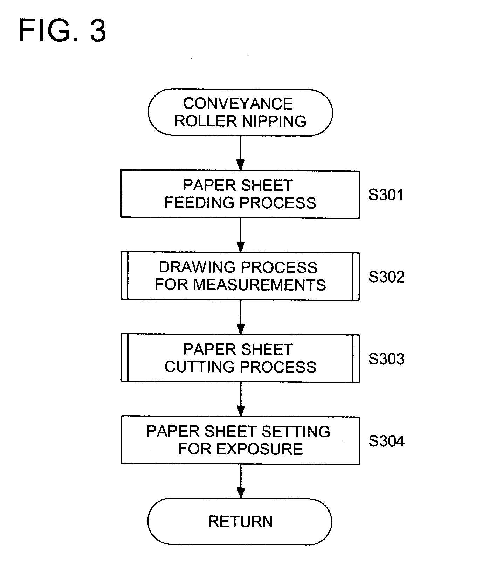

Paper sheet feeding process (Step 206) works as a paper-feeding device, and the operation of which will be explained by using the flow chart in Fig. 3.

Paired conveyance rollers nip the leading edge of photographic paper sheet drawn from a cartridge housed in paper sheet feeding section (Step S301). An encoder then conducts a process to measures the length of paper sheet drawn from the cartridge as a feeding motor is drawing photographic paper sheet stored in the cartridge (Step S302).

After that, CPU 101 executes a paper cutting process (Step S303) to cut photographic paper sheet to a predetermined length, and then, executes a paper sheet setting process (in an exposed-chamber) (Step S304) to attach the cut photographic paper sheet onto drum 31, via a guide.

Returning to Fig. 2, CPU 101 executes printing process associated with edge effect compensation process, which is a major feature of the embodiment of the present invention (Step S207).

Initially, decompression section 203 expands compressed image data, separates the data into image data and continuous condition detecting results (Step S2071), supplies image data to LUT 205 as address data and supplies detected continuous condition result as a table selecting signal.

Image data from a host apparatus stored in image data storage device 204 is converted to reproduced color density data which expresses image data by color density (Step 2072).

Next, image data are checked to be determined whether they are continuous or discontinuous pixels (Step S2073).

If reproduced color density pixels are continuous, then the reproduced color density data are converted to light source driving data by using continuous pixel color density - light source driving data conversion table 205b so that each color density of Y, M and C in continuous pixels, is accurately reproduced when reproducing any pixel of Y, M or C, or accumulations of these pixels on the photographic material (Step S2074).

When the reproduced color density data is discontinuous, reproduced color density data are converted to light source driving data based on the discontinuous pixel color density - light source driving data conversion table so that the color density drop of Y, M and C at an edge section or discontinuous pixel is compensated when reproducing pixels of Y, M or C, or accumulating of these pixels on the photographic material (Step S2075).

Driving data to drive each pixel of the light source are generated in light source driving data 205d based by the combination of generated light source driving data color. And then the driving data drives light source to expose the photographic material (Step S2076).

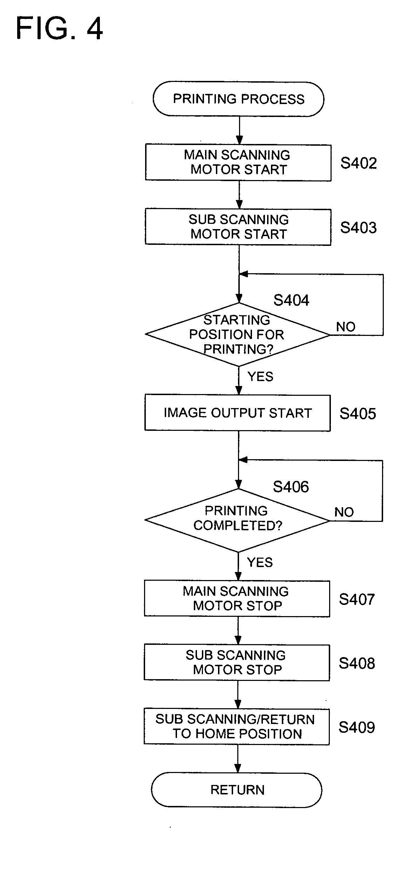

The data conversion and exposure described above are sequentially executed for each color stored in image data storage device 204 (Step S2077 -> S2071). Based on these processes, color images are recoded onto photographic paper sheet by exposing the photographic material having plural color layers, to different light beams whose wavelengths are different each other, from plural light sources. Fig. 4 is a flowchart showing the operations of mechanical configuration of this printing process.

CPU 101 instructs drum rotating motor M6, which is a main scanning motor in an exposing chamber (Step S402), and sub-scanning motor M7 to begin rotating (Step S403). And then, CPU 101 judges whether photographic paper sheet set in drum 31 and optical unit 32 are positioned in a print starting position (Step S404). And if the photographic paper sheet set is not in the print starting positions (Step S404: N), then they are moved to the stating positions respectively.

After that, if the photographic paper sheet set in drum 31 and optical unit 32 are in the starting positions, then CPU 101 instructs LED 320 to emit laser beans to begin outputting of image data (Step S405). In this step (Step S405) the data conversion and an exposure based on whether a continuous pixel or a discontinuous pixel, are performed as described in step S207 in Fig. 2.

The image output is continued until the printing is completed (Step S406).

When a printing is completed (Step S406: Y), CPU 101 stops the rotation of drum rotating motor M6, which is a main scanning motor in an exposing chamber (Step S407) and of sub-scanning motor M7 (Step S408) and then performs "sub-scanning/returning to home position" to move optical unit 320 to home position (Step S409).

Returning to Fig. 2, CPU 101 performs paper sheet delivery process which conveys paper sheets from drum 31 to accumulator guide 29 (Step S208) and "carry out process" which conveys paper sheets from accumulator guide to image developing unit 4 (Step S209), and then, development process is performed in developing unit 4 after the paper sheets are taken out. After the photographic paper sheets are taken out (Step S209), the process shifts to step S203, and repeats steps S203-S208 or steps S203-209.

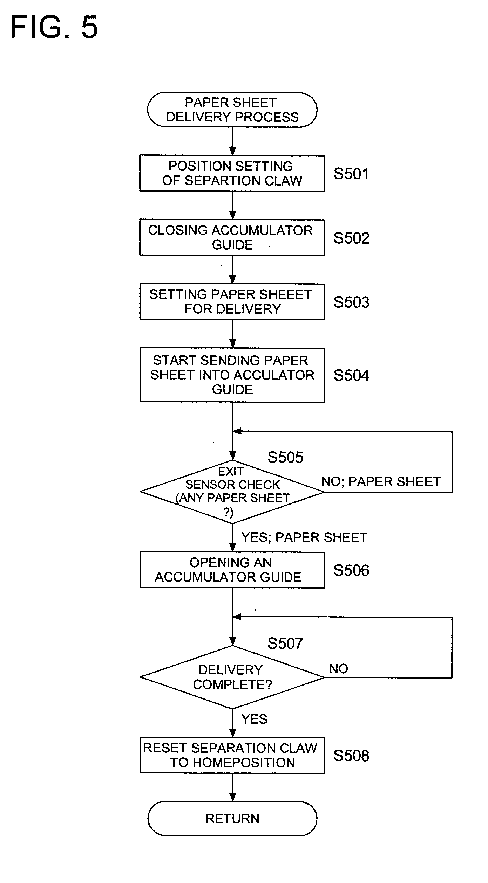

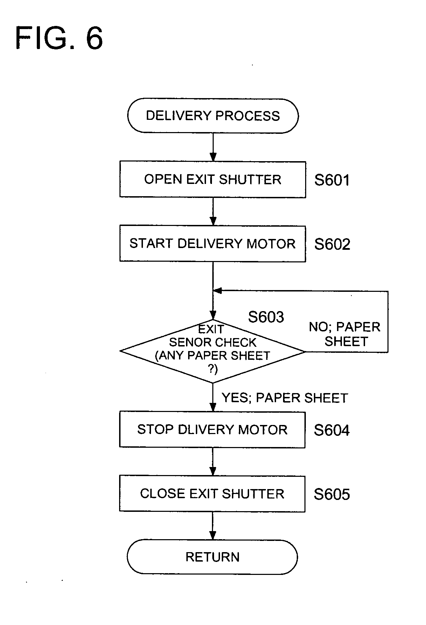

"Paper sheet delivery process" and "ejecting process" performed by CPU 101 are shown in a flowchart in Fig. 5 and Fig. 6. Fig. 5 is a flowchart showing the operation of "paper sheet delivery process". A photographic paper sheet being sucked on drum 31 is exposed under the condition that the photographic paper sheet is being sucked on the surface of drum 31. CPU 101 sets separation claw guide 51, which has been positioned in the lower position, to the separation position where a separation claw 51 is in contact with drum 31, by using raising/lowering motor M9 (S501).

After that, CPU 101 moves accumulator guide 29 from a lower position to an upper position and causes separation claw 51 to close a conveyance path through which separated photographic paper sheets are conveyed to accumulator guide 29(Step S502). After that, CPU 101 moves photographic paper sheets sucked on drum 31 to the position where the separation claw is in touch with drum 31 (Step S503), and then separates photographic paper sheet on drum 31 and starts delivering into accumulator guide 29 (Step 504). And then, an exit sensor detects photographic paper sheets and judges whether the photographic paper sheet reaches to the exit (Step S505). CPU 101 continues the conveyance while no photographic paper sheet is detected (Step S505: N) and if photographic paper sheet is detected (Step S505: Y) then lowers accumulator guide 29 and makes the conveyance path which is from drum 31 to accumulator guide 29 to an open status (Step S506). Based on this process above; CPU 101 causes the photographic paper sheets to be hung down from accumulator guide 29, which is called an accumulation status and checks whether the delivery has been completed (stepS507); if the delivery has not been completed yet (Step S507: N), continues the delivery; if the delivery has been completed (Step S507: Y), then moves a separation claw to the home position while keeping separation claw 51 in lower position and completes a delivery process.

The ejecting process of step S209 in Fig. 2 will be explained by using a flowchart shown in Fig. 6. Photographic paper sheets in the accumulation condition, is delivered to developing process unit 4 based on the ejecting process of step S209.

CPU 101 opens exit shutter 55 (Step S601) and passes photographic paper sheets through shutter 55. Then, CPU 101 begins rotation of delivery drive motor M8 (Step S602), and starts the delivery of photographic paper sheets to developing process unit 4.

After that, CPU 101 detects photographic paper sheets and judges whether photographic paper sheet is in the exit by using an exit sensor (Step S603). If photographic paper sheet exists at the exit (Step S603Y), CPU 101 continues the delivery of the photographic paper sheets; if no photographic paper sheet is detected (Step S603: N), then stops the rotation of delivery drive motor M8 (Step S604), and closes exit shutter 55 (Step S605); and completes this process.

After that, CPU 101 returns to Step 203 and repeats image data receiving, a feeding paper sheet process, a printing process, a paper sheet delivery process and a carrying-out process.

The following good effects will be obtained based on "edge effect compensation process" in an embodiment of the present invention as explained above.
(1) In this embodiment, when an image recording apparatus receives image data being separated into color plates of yellow (Y), magenta (M), cyan (C) and black (K), following processes will be executed by the main control section in the image recording apparatus: Firstly, generating light source driving data based on the image data; driving plural light sources by the light source driving data of each color to expose photographic material having plural color development layers to different light beams having different wavelength from each other; and recording color images on the photographic material, wherein when converting reproduced color density data to light source driving data after converting the image data to the reproduced color density data, which expresses the image data as a reproduced color density, a continuous pixel color density - light source conversion table which converts the reproduced color density of continuous pixel color density to the light source driving data, and a discontinuous pixel color density - light source driving data conversion table which converts the reproduced color density of discontinuous image pixel color density to the light source driving data are provided so that color density drops associated with discontinuous image pixel is compensated in the discontinuous pixel color density - light source driving data conversion table.
   In other words, when generating the light source driving data, the discontinuous pixel color density - light source driving data conversion table, which is different from the continuous pixel color density - light source conversion table to convert the reproduced color density to the light source driving data, is used to compensate the color density drops, which occurs at discontinuous pixels. By taking this method described above, it becomes possible to avoid the phenomenon that the color density drops occur at the edges of the mesh or a portion of discontinuous pixels when forming a mesh point image on photographic material.
(2) In this embodiment, it is preferable that the level of color density of discontinuous pixel in the discontinuous pixel color density - light source driving data conversion table is arranged to be the same level of the color density of the continuous image pixel which is generated on the photographic material. By doing this way, it becomes possible to reproduce faithful colors and further to prevent dotted color gaps.
(3) In this embodiment, it is also preferable to provide a detecting device to detect whether the image data is a continuous pixel or discontinuous pixel and to selectively use the continuous pixel color density - light source driving data conversion table or the discontinuous pixel color density - light source driving data conversion table in the color density - light source driving data conversion table based on the results of the detecting device. It becomes possible to establish a steady operation.

In addition, in this embodiment described above, image data is compressed with the detected result of a continuous state of pixels, however it is not always necessary to do so. Namely, it is allowed to store the image data and the detected results of the continuous state of the pixels in image data storage device 204. In such a case, compression section 202 may be assigned to a continuous state detecting section and the decompression section may be assigned to a continuous state detecting result separation section.

As explained in detail, there was a case that a phenomenon that the size of the mesh becomes smaller due to the discontinuous image pixel effects occurred based on the characteristics of the photographic material or characteristics of the light beams used for the exposure based on the each exposed color. However, according to the present invention, it becomes possible to avoid the phenomenon that color density drops occur at the edge of the mesh of the mesh point image, which is formed on a photographic material by providing the continuous pixel color density - light source driving data conversion table which converts the continuous image pixels of reproduced color density data to the light source driving data and the discontinuous pixel color density - light source driving data conversion table which converts the discontinuous image pixels of reproduced color density data to the light source driving data, and compensating the color density drops in the discontinuous image pixels by using the discontinuous image pixel color density - light source driving data conversion table. Further, according to the present invention, it becomes possible to prevent the phenomenon of color gap occurs around the mesh due to the fact that the size of the mesh becomes different each other based on the used color when combining two or more colors from the group of Y, M and C.

## Claims

1. An image recording apparatus to record color images onto a photographic material having plural color layers exposed to light beams from plural light sources having different wavelength each other, wherein the plural light sources are driven by light source driving data generated from image data being input to the image recording apparatus and separated into each color plate of yellow (Y), magenta (M), cyan (C) and black (K), the image recording apparatus comprising:
an exposing section having plural light sources to expose the photographic material;
a control device to cause the light source driving data based on the image data to drive the light source to expose the photographic material;
a data conversion device to convert image data to light source driving data via reproduced color density data expressing the image data as a color density; the data conversion device comprising:
a color correction table to convert the image data to reproduced color density data expressing the image data as color densities;
an color density - light source driving data
conversion table to convert the reproduced color density data to light source driving data;
a light source driving data table to control switching of light sources pixel by pixel based on a color combination of the light source driving data; the color density - light source driving data conversion table comprising:
a continuous image pixel color density - light source driving data conversion table to convert the reproduced color density of continuous pixel color density to the light source driving data; and
a discontinuous image pixel color density - light source driving data conversion table to convert the reproduced color density of discontinuous image pixel color density to the light source driving data, wherein
the discontinuous image pixel color density - light source driving data conversion table is arranged so that color density drops associated with discontinuous image pixel is compensated in the discontinuous pixel color density - light source driving data conversion table.

2. The image recording apparatus as claimed in claim 1 wherein the color density of discontinuous image pixel is arranged so that the color density of discontinuous image is equal to the color density of continuous image pixel.

3. The image recording apparatus as claimed in claim 1 wherein the image recording apparatus having a detecting device to detect whether the image data is continuous image pixel or discontinuous image pixel selectively uses the continuous pixel color density - light source driving data conversion table or the discontinuous pixel color density - light source driving data conversion table in the color density - light source driving data conversion table based on the result of the detecting device.

4. The image recording apparatus as claimed in claim 2 wherein the image recording apparatus having a detecting device to detect whether the image data is continuous image pixel or discontinuous image pixel selectively uses the continuous pixel color density - light source driving data conversion table or the discontinuous pixel color density - light source driving data conversion table in the color density - light source driving data conversion table based on the result of the detecting device.
